# EUROPEAN PATENT SPECIFICATION

(11) **EP 0 503 599 B1**
(45) Date of publication and mention of the grant of the patent: **05.06.1996**
(21) Application number: 92104195.0
(22) Date of filing: 11.03.1992
(51) Int. Cl.: G01S 17/36, G01C 3/08, G01C 17/02

(54) **Light-wave distance measuring apparatus for vehicle**
Lichtwellen-Entfernungsmesser für Fahrzeuge
Dispositif de mesure optique de distance pour véhicules

(30) Priority: 12.03.1991 JP 72600/91; 12.03.1991 JP 72601/91; 12.03.1991 JP 72602/91
(43) Date of publication of application: 16.09.1992
(73) Proprietor: Stanley Electric Co., Ltd., Meguro-ku Tokyo 153 (JP)
(72) Inventor: Omamyuda, Yukio, Sagamihara-shi, Kanagawa-ken (JP); Kimura, Shigeru, Yokohama-shi, Kanagawa-ken (JP); Tanabe, Toru, Machida-shi, Tokyo (JP); Iwasaki, Kazuhisa, Yokohama-shi, Kanagawa-ken (JP); Seto, Takao, Midori-ku, Yokohama-shi, Kanagawa-ken (JP); Kitamura, Hideki, Yokohama-shi, Kanagawa-ken (JP); Sugimura, Kazuhiko, Yokohama-shi, Kanagawa-ken (JP); Senoo, Yasushi, Yokohama-shi, Kanagawa-ken (JP)
(74) Representative: Dr. Elisabeth Jung Dr. Jürgen Schirdewahn Dipl.-Ing. Claus Gernhardt

(56) References cited:
- EP-A- 0 030 369
- DE-A- 2 605 799

## Description

### BACKGROUND OF THE INVENTION

### 1. Field of the invention

The present invention relates to a light-wave distance measuring apparatus for a vehicle which apparatus is mounted in an automobile or the like (vehicle) and is provided for measuring a distance to a target object.

### 2. Description of the Related Prior Art

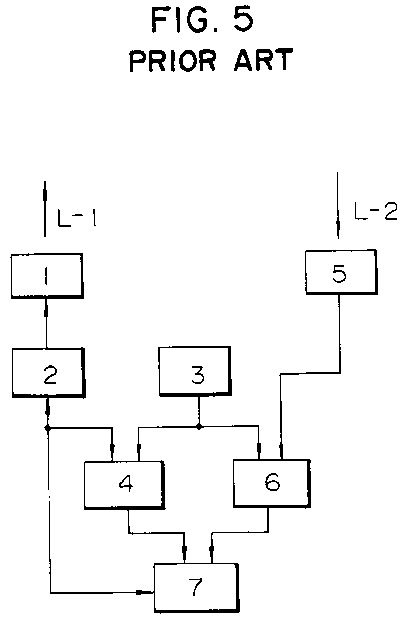

FIG.5 is an electric circuit block diagram of a prior art light-wave distance measuring apparatus, i.e. an apparatus which electrically measures a distance to a target object using a light wave signal.

This apparatus comprises a light intensity modulator 1, a reference oscillator 2, a local oscillator 3, a first mixer 4, a demodulator 5, a second mixer 6, a phase meter 7 and a CPU 8. The reference oscillator 2 produces a reference signal. The light intensity modulator 1 produces a light intensity modulated signal (outgoing light beam) L-1 from the reference signal emitted from the reference oscillator 2 and transmits it to a target object (i.e. the object the distance to which is to be measured.)

The demodulator 5 demodulates a reflected light signal L-2 from the target object. The first mixer 4 mixes the reference signal from the reference oscillator 2 with a local oscillator signal from the local oscillator 3 for converting the frequency of the reference signal. The second mixer 6 mixes the demodulated signal from the demodulator 5 with the local oscillator signal for converting the frequency of the demodulated signal. The phase meter 7 produces a phase difference between a frequency-converted signal from the first mixer 4 and a frequency-converted signal from the second mixer 6. The CPU 8 receives and processes a signal from the phase meter 7 to produce a distance value corresponding to the distance between the vehicle and the target object.

Since it is supposed that the prior art light-wave distance measuring apparatus is employed alone, the apparatus usually has no measures for nullifying or preventing an interference which is caused by a light wave transmitted from another ligh-wave distance measuring apparatus. Accordingly, when corresponding light-wave distance measuring apparatuses mounted on vehicles are present in a small area, they are exposed to an interference due to a light wave from, for example, an approaching vehicle. This causes a problem in the distance measurement.

In addition, it is supposed that almost all of prior art light-wave distance measuring apparatuses are employed in a case where both apparatus and target object are static. Therefore, even if the apparatus can measure a distance to the target object, there is a problem that the apparatus fails to provide a sufficient amount of data for the distance measurement in a case where both the apparatus and the target object move away from or to each other, which may e.g. be the case when a vehicle driving ahead moves essentially at the same speed and in the same direction as the vehicle to which the apparatus is mounted. The safety of measurement in the latter case is much lower than in a case in which both the apparatus and the target object are static. The persons skilled in the art have been seeking to solve this problem.

### SUMMARY OF THE INVENTION

A primary object of the present invention is to provide a light-wave distance measuring aparatus for a vehicle which accurately operates even when both the apparatus and the target object are moving.

Another object of the present invention is to provide a light-wave distance measuring apparatus for a vehicle which accurately operates without any interference even when several light-wave distance measuring apparatuses for vehicles are used in a small area.

In order to achieve these objects, the light-wave distance measuring apparatus for a vehicle for measuring a distance to a target object from a phase difference between a signal modulated in light intensity and a reflected signal which corresponds to the signal modulated in light intensity after reflection from the target object comprises intermittent control means continuously changing the length of the periods of time permitting and prohibiting a transmission of the signal modulated in light intensity. The apparatus can prevent an interference which may be caused by another light-wave distance measuring apparatus for a vehicle. The apparatus may comprise means for producing time-marking signals at times at which the signal modulated in light intensity has been transmitted, means for measuring an interval between the time-marking signals, means for detecting the speed of the apparatus and means for computing the speed of the target object from the apparatus-speed signal issued from the apparatus-speed detecting means and a distance between the apparatus and the target object and for selecting a distance resolution in response to the apparatus-speed signal.

Since the apparatus continuously changes the length of the periods of times for transmitting and stopping transmission of the light intensity modulated signal, there is a very low possibility of signal synchronizations even if a light intensity modulated signal from an approaching vehicle is received by the apparatus. Thus, the apparatus can avoid that it is impossible to measure its distance to a target object and further its misfunction can be avoided.

In addition, since the apparatus produces the time marking signals at the starting times of the optical output signals to the target object, the apparatus can measure the speed of the target object from the interval between the time marking signals, the difference in the distance data and the apparatus-speed. In addition, since the apparatus detects its speed, the apparatus can easily select the distance resolution appropriate to the apparatus-speed or relative speed of the apparatus and the target object. Thus, the apparatus can accurately measure the distance between the apparatus and the target object even when both are moving.

### BRIEF DESCRIPTION OF THE DRAWINGS

Fig. 1 is an electric circuit block diagram of a light-wave distance measuring apparatus for a vehicle according to a first embodiment of the present invention;
Fig. 2 is a timing chart showing the operation of the apparatus of Fig. 1;
Fig. 3 is an electric circuit block diagram of a light-wave distance measuring apparatus for a vehicle according to a second embodiment of the present invention;
Fig. 4 is an electric circuit block diagram of a light-wave distance measuring apparatus for a vehicle according to a third embodiment of the present invention;
Fig. 5 is an electric circuit block diagram of a prior art light-wave distance measuring apparatus.

### DESCRIPTION OF THE PREFERRED EMBODIMENTS

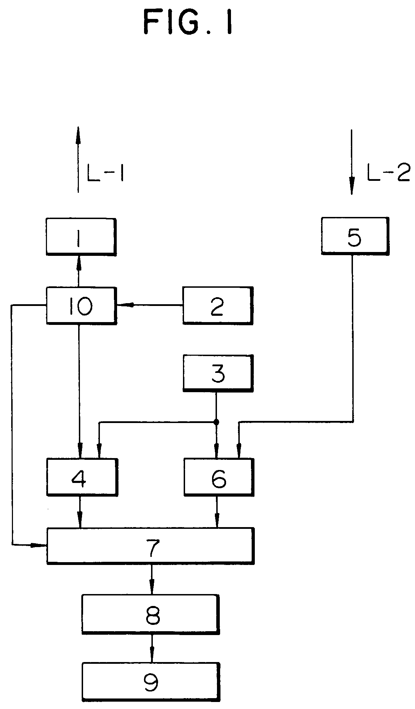

Preferred embodiments of the present invention will be hereinafter described with reference to Figs. 1 to 4. For a better understanding, the same reference signs are used for indicating the components of the preferred embodiments corresponding to those of the prior art apparatus and corresponding parts of the description of the components are not repeated.

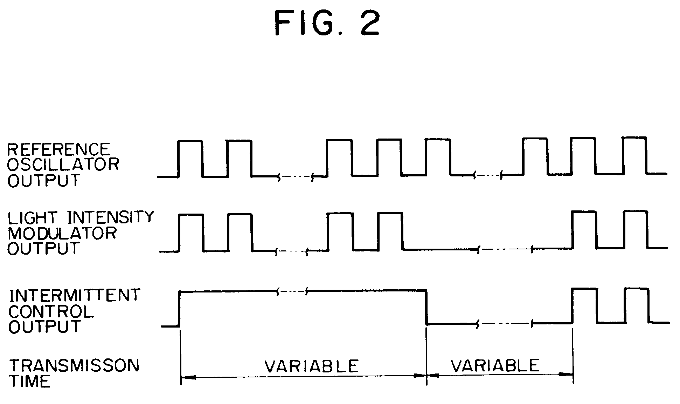

Figs. 1 and 2 show a light-wave distance measuring apparatus for a vehicle according to a first embodiment of the present invention. The apparatus comprises an intermittent control 10 receiving a reference signal from the reference oscillator 2 and supplying a control signal to the light intensity modulator 1, the first mixer 4 and the phase meter 7.

As shown in Fig. 2, the intermittent control 10 continuously changes the periods of time during which it permits the reference oscillator 2 to supply the reference signal to the light intensity modulator 1 and the periods of time during which it prohibits the reference oscillator 2 to supply the references signal to the light intensity modulator 1. Thus, the light intensity modulator 1 produces a light intensity modulated signal only while receiving the control signal from the intermittent control 10.

The phase meter 7 operates only while receiving the control signal from the intermittent control 10. The CPU 8 comprising e.g. a microcomputer receives and processes a signal from the phase meter 7 and computes the distance between the present vehicle to which the apparatus is mounted and a target object. A display 9 displays the distance computed by the CPU 8.

Thus, since the intermittent control 10 of the first embodiment of the present invention continuously changes the periods of time for permitting and prohibiting the transmission of the light intensity modulated signal, there is a very low possibility that a light intensity modulated signal or the like from an approaching vehicle etc. is in synchronization with an emitted signal from the present apparatus and reflected from the target object even if the former signal is entered into the demodulator 5 of the present apparatus. This reduces a possibility that the apparatus mounted to the present vehicle will malfunction.

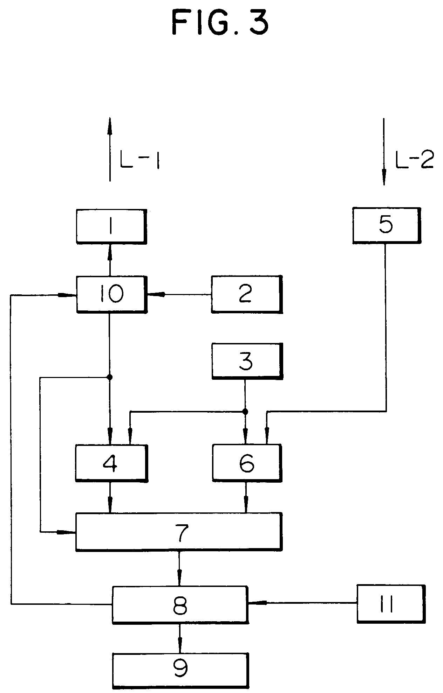

Fig. 3 shows a light-wave distance measuring apparatus for a vehicle according to a second embodiment of the present invention. This apparatus comprises a speed detector 11 detecting the speed of the apparatus from e.g. the number of revolutions of a tire of the present vehicle. The CPU 8 computes the periods of time for permitting and prohibiting the transmission of the light intensity modulated signal from the light intensity modulator 1 basing on the speed data from the speed detector 11 and supplies a corresponding control signal to the intermittent control 10.

Thus, since the apparatus of the second embodiment determines the periods of time for permitting and prohibiting the transmission of the light intensity modulated signal in response to a constant apparatus-speed signal, which is characteristic of the present vehicle, the apparatus can more clearly distinguish a reflected light beam signal of the present apparatus from both the light intensity modulated light beam signal and the corresponding reflected light beam signal of a second light-wave distance measuring apparatus which is mounted on another vehicle even if the second apparatus transmits a light intensity modulated signal which is processed likewise. Accordingly, the apparatus of the second embodiment of the present invention can more securely prevent its malfunction.

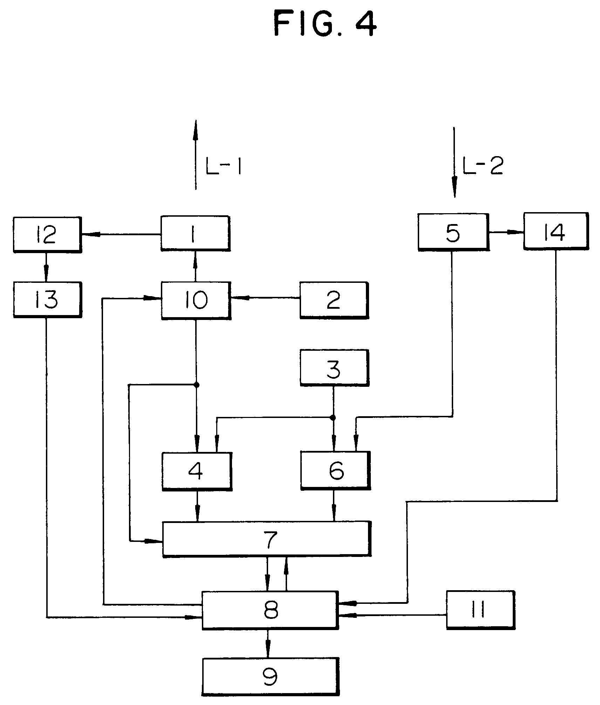

Fig. 4 shows a light-wave distance measuring apparatus for a vehicle according to a third embodiment of the present invention. This apparatus comprises a time marker 12 and a light transmission time interval measurement means 13 in addition to the components of the apparatus of the second embodiment of the present invention. The apparatus of the third embodiment can determine whether the target object is moving or not and can enhance usability in addition to that both the second and third embodiments can avoid an interference with a light intensity modulated signal from a corresponding light-wave distance measuring apparatus.

The time marker 12 supplies a time-marking signal to the light transmission time interval measurement means 13 at a starting time of an optical output of the light intensity modulator 1, i.e., at a time at which the light intensity modulator 1 starts producing a signal modulated in light intensity. The light transmission time interval measurement means 13 measures an interval between time marking signals and supplies corresponding time interval data to the CPU 8.

The CPU 8 computes the speed of the target object from the time interval data from the light transmission interval measurement means 13, a difference between the last and the present measured values of the distance between the apparatus and the target object which values are derived from phase difference data between the outgoing and reflected light beams and speed data of the apparatus from the apparatus-speed detector 1. The display 9 displays the speed of the target object computed by the CPU 8.

The CPU 8 converts the phase difference data to the distance data, receives the speed data of the present apparatus from the apparatus-speed detector 11, selects a distance resolution of the phase meter 7 in response to the apparatus-speed data, and supplies a signal of the selected distance resolution to the phase meter 7. Thus, the CPU 8 selects a measurement accuracy which is in accordance with a dase where the target object is static or is approaching to the apparatus, for example.

The demodulator 5 has an optical path monitor 14 which monitors data of the outgoing light beam L-1 and the reflected light beam L-2 so as to detect the phase difference (e.g. an interception in the optical paths between the apparatus and the target object), i.e., a significant change in the reflected light beam L-2 affecting the distance data so as to much reduce a malfunction of the apparatus.

Thus, the apparatus of the third embodiment of the present invention produces time-marking signals at starting times at which the light intensity modulator 1 has started transmitting the light intensity modulated signal to the target object, so that the apparatus can compute the speed of the target object from the time interval between the time-marking signals, the difference in the distance data and the self-speed. In addition, since the apparatus detects its speed, the apparatus can easily select the distance resolution appropriate to the self-speed or relative speed of the apparatus and the target object. Thus, the apparatus can accurately measure the distance between the apparatus and the target object even when both are moving.

## Claims

1. A light-wave distance measuring apparatus for a vehicle for measuring the distance to a target object from a phase difference between a light signal modulated in intensity (L-1) and a reflected signal (L-2) which corresponds to said signal modulated in intensity (L-1) after reflection from said target object,
characterized in that
said signal modulated in intensity (L-1) is only transmitted during some periods of time
and in that
intermittent control means (10) are provided to continuously change the length of the periods of time in which signal transmission is permitted and prohibited.

2. The light-wave distance measuring apparatus for a vehicle according to claim 1, further comprising means (11) for detecting the speed of said apparatus itself, and in which said intermittent control means (10) change said length of the periods of time in response to the distance between said apparatus and said target object and to said apparatus-speed.

3. The light-wave distance measuring apparatus for a vehicle according to claim 2, further comprising:
means (12) for producing time-marking signals at times at which the signal modulated in light intensity (L-l) has been transmitted;
means (13) for measuring an interval between said time-marking signals; and
means (8) for computing the speed of said target object from the apparatus-speed signal issued from said apparatus-speed detecting means (11) and the distance between said apparatus and said target object and for selecting a distance resolution in response to said speed signal of the apparatus.

## Patentansprüche

1. Ein Lichtwellenabstand-Meßgerät für ein Fahrzeug zum Messen des Abstands zu einem Zielobjekt aus einer Phasendifferenz zwischen einem Intensitäts-modulierten Lichtsignal (L-1) und einem reflektierten Signal (L-2), welches dem Intensitäts-modulierten Signal (L-1) nach der Reflektion vom Zielobjekt entspricht,
**dadurch gekennzeichnet,** daß
das Intensitäts-modulierte Signal (L-1) nur während bestimmten Zeiträumen übertragen wird, und daß
eine intermittierende Steuereinrichtung (10) vorgesehen ist, um kontinuierlich die Länge der Zeiträume, in denen die Signalübertragung erlaubt und nicht erlaubt ist, zu ändern.

2. Das Lichtwellenabstand-Meßgerät für ein Fahrzeug nach Anspruch 1, weiter umfassend eine Einrichtung (11) zum Erkennen der Geschwindigkeit des Geräts selber, und bei dem die intermittierende Steuereinrichtung (10) die Länge der Zeiträume in Abhängigkeit von dem Abstand zwischen dem Gerät und dem Zielobjekt und der Geschwindigkeit des Geräts ändert.

3. Das Lichtwellenabstand-Meßgerät für ein Fahrzeug nach Anspruch 2, weiter umfassend:
eine Einrichtung (12) zum Erzeugen von Zeitmarkiersignalen an Zeitpunkten, an denen das Lichtintensitäts-modulierte Signal (L-1) übertragen worden ist;
eine Einrichtung (13) zum Messen eines Intervalls zwischen den Zeitmarkiersignalen; und
eine Einrichtung (8) zum Berechnen der Geschwindigkeit des Zielobjekts aus dem Geschwindigkeitssignal des Gerätes, ausgegeben von der Einrichtung zum Erkennen der Geschwindigkeit des Geräts (11), und dem Abstand zwischen dem Gerät und dem Zielobjekt, und zum Auswählen einer Abstandsauflösung in Abhängigkeit von dem Geschwindigkeitssignal des Geräts.

## Revendications

1. Dispositif optique de mesure de distance pour véhicule, destiné à mesurer la distance à un objet cible à partir d'une différence de phase entre un signal modulé en intensité lumineuse (L-1) et un signal réfléchi (L-2) qui correspond audit signal modulé en intensité (L-1) après réflexion depuis ledit objet cible,
caractérisé en ce que
ledit signal modulé en intensité (L-1) n'est transmis que pendant quelques périodes de temps
et en ce que
des moyens de commande (10) intermittents sont fournis afin de faire varier de manière continue la longueur des périodes de temps dans lesquelles la transmission de signal est autorisée et interdite.

2. Appareil optique de mesure de distance pour véhicule selon la revendication 1, comprenant en outre des moyens (11) pour détecter la vitesse dudit appareil lui-même, et dans lequel des moyens de commande (10) intermittents font varier ladite longueur des périodes de temps en réponse à la distance entre ledit appareil et ledit objet cible et à ladite vitesse de l'appareil.

3. Appareil optique de mesure de distance pour véhicule selon la revendication 2, comprenant en outre :
des moyens (12) pour produire des signaux de marquage de temps à des temps auxquels le signal modulé en intensité lumineuse (L-1) a été transmis ;
des moyens (13) pour mesurer un intervalle entre lesdits signaux de marquage de temps ; et
des moyens (8) pour calculer la vitesse dudit objet cible à partir du signal de vitesse de l'appareil émis depuis lesdits moyens de détection (11) de la vitesse de l'appareil, et la distance entre ledit appareil et ledit objet cible, et pour choisir une résolution de distance en réponse audit signal de vitesse de l'appareil.
